# EUROPEAN PATENT APPLICATION

(11) **EP 4 534 894 A1**
(43) Date of publication of application: **09.04.2025**
(21) Application number: 23829718.8
(22) Date of filing: 09.05.2023
(51) Int. Cl.: F21S 45/46, F21V 29/56

(54) **VEHICLE LAMP AND VEHICLE**

(30) Priority: 01.07.2022 CN 202210767913
(71) Applicant: Shenzhen Yinwang Intelligent Technologies Co., Ltd., Shenzhen, Guangdong 518129 (CN)
(72) Inventor: LEI, Ying, Shenzhen, Guangdong 518129 (CN); ZHOU, Zhi, Shenzhen, Guangdong 518129 (CN); LIAO, Zhiquan, Shenzhen, Guangdong 518129 (CN)
(74) Representative: Körber, Martin Hans
(86) International application number: PCT/CN2023/092985
(87) International publication number: WO 2024/001532

(57) **Abstract**

Embodiments of this application disclose a vehicle lamp and a vehicle. The vehicle lamp specifically includes a lamp housing, a heating device, a liquid cooling plate, a liquid inlet pipe, and a liquid outlet pipe. The heating device is attached to the liquid cooling plate. The liquid cooling plate is connected to a liquid cooling loop system in the vehicle through the liquid inlet pipe and the liquid outlet pipe. Heat exchange may be performed by using the liquid cooling loop system in the vehicle and the liquid cooling plate, to reduce a temperature of the heating device in the vehicle lamp. This reduces requirements for a size of the vehicle lamp and a structure of the vehicle lamp on the basis that a heat dissipation requirement of the vehicle lamp is met.

## Description

This application claims priority to Chinese Patent Application No. 202210767913.0, filed with the China National Intellectual Property Administration on July 1, 2022 and entitled "VEHICLE LAMP AND VEHICLE", which is incorporated herein by reference in its entirety.

### TECHNICAL FIELD

Embodiments of this application relate to the vehicle field, and in particular, to a vehicle lamp and a vehicle.

### BACKGROUND

With innovation and continuous development of vehicle technologies, a vehicle lamp system also develops from an original single illumination attribute to a personalized appearance, safe interaction, and intelligent driving (a small size and high power).

Due to a power increase and a size change of a vehicle lamp, heat generated by the vehicle lamp also increases. To dissipate the heat for the vehicle lamp system, a main manner is to add a fan and a heatsink to the vehicle lamp.

However, adding the fan and the heatsink to the vehicle lamp increases a requirement for a size and a structure (adaptability) of the vehicle lamp, and reduces experience of a user and a manufacturer.

### SUMMARY

Embodiments of this application provide a vehicle lamp, to meet a heat dissipation requirement of the vehicle lamp and reduce requirements for a size of the vehicle lamp and a structure of the vehicle lamp. Embodiments of this application further provide a corresponding vehicle, a corresponding connector, and the like.

A first aspect of this application provides a vehicle lamp. The vehicle lamp includes a lamp housing, a heating device, a liquid cooling plate, a liquid inlet pipe, and a liquid outlet pipe. The heating device is attached to the liquid cooling plate. The liquid cooling plate is connected to a liquid cooling loop system outside the lamp housing through the liquid inlet pipe and the liquid outlet pipe.

In this application, the liquid cooling plate is connected to the liquid cooling loop system outside the lamp housing through the liquid inlet pipe and the liquid outlet pipe. Cooling liquid in the liquid cooling loop system may flow into the liquid cooling plate through the liquid inlet pipe. After exchanging heat with the heating device, the cooling liquid in the liquid cooling plate flows back to the liquid cooling loop system outside the lamp housing through the liquid outlet pipe.

The cooling liquid in this application may be distilled water, deionized water, another water-cooled liquid, or the like. The vehicle lamp includes a headlamp, a tail lamp, another decorative lamp, or the like in a vehicle.

The liquid cooling plate in this application may be located inside or outside the lamp housing. When the liquid cooling plate is disposed inside the lamp housing, the lamp housing is provided with a connecting through hole. The liquid cooling plate, the liquid inlet pipe, and the liquid outlet pipe may be connected to the liquid cooling loop system through a connector mounted in the connecting through hole, or may be directly connected to the liquid cooling loop system through the connecting through hole.

According to the first aspect, the heating device is attached to the liquid cooling plate. The liquid cooling plate is connected to the liquid cooling loop system in the vehicle through the liquid inlet pipe and the liquid outlet pipe. Heat exchange may be performed by using the liquid cooling loop system in the vehicle and the liquid cooling plate, to reduce a temperature of the heating device in the vehicle lamp. This reduces requirements for a size of the vehicle lamp and a structure of the vehicle lamp on the basis that a heat dissipation requirement of the vehicle lamp is met.

In a possible implementation of the first aspect, the liquid cooling plate is located in sealed space inside the vehicle lamp. The lamp housing includes the connecting through hole. The liquid inlet pipe and the liquid outlet pipe are connected to the liquid cooling loop system through the connecting through hole.

In this possible implementation, the heating device is also disposed inside the lamp housing. The heating device is a light source or a pixel. In this case, implementability of this solution is improved.

In a possible implementation of the first aspect, the vehicle lamp further includes the connector. The connector is mounted in the connecting through hole. The liquid inlet pipe and the liquid outlet pipe are connected to the liquid cooling loop system through the connector.

In this possible implementation, the liquid cooling plate, the liquid inlet pipe, and the liquid outlet pipe may be connected to the liquid cooling loop system through the connector mounted in the connecting through hole. In this case, implementability of this solution is improved.

In a possible implementation of the first aspect, the connector includes a support, a liquid inlet pipe joint, a liquid outlet pipe joint, a sealing component, and a fastening component. The liquid inlet pipe joint and the liquid outlet pipe joint are located on the support. The liquid inlet pipe joint is connected to the liquid inlet pipe. The liquid outlet pipe joint is connected to the liquid outlet pipe. The fastening component is configured to fasten the support to the lamp housing. The sealing component is located on the support. The sealing component is attached to the lamp housing.

In this possible implementation, the connector is fastened to the connecting through hole of the lamp housing. The liquid cooling loop system may be connected to the inside of the vehicle lamp. In this case, the sealed space of the vehicle lamp is ensured and implementability of this solution is improved.

In a possible implementation of the first aspect, the sealing component is a sponge or a sealing ring.

In a possible implementation of the first aspect, the sealing component is a soft rubber that is integrated with the support.

In a possible implementation of the first aspect, the fastening component is a screw or a fastener.

In a possible implementation of the first aspect, the connecting through hole includes a first through hole and a second through hole. The liquid inlet pipe is connected to the liquid cooling loop system through the first through hole. The liquid outlet pipe is connected to the liquid cooling loop system through the second through hole.

In this possible implementation, the liquid cooling plate, the liquid inlet pipe, and the liquid outlet pipe may be directly connected to the liquid cooling loop system through the connecting through hole. In this case, implementability of this solution is improved.

In a possible implementation of the first aspect, a rubber ring is disposed at each of a fitting position between the liquid inlet pipe and the first through hole and a fitting position between the liquid outlet pipe and the second through hole.

In this possible implementation, the rubber ring further improves sealing effect of the lamp housing.

In a possible implementation of the first aspect, the liquid cooling plate is located on the lamp housing or outside the lamp housing. The inside of the vehicle lamp is sealed space.

In this possible implementation, this can avoid leakage of the cooling liquid to the inside of the lamp housing, avoid condensation in the vehicle lamp, and improve reliability of the vehicle lamp.

In a possible implementation of the first aspect, the heating device is located on the lamp housing.

In this possible implementation, the heating device is a light source driver module or a vehicle lamp control module. In this case, implementability of this solution is improved.

In a possible implementation of the first aspect, the heating device includes at least one of a light source, a pixel, a light source driver module, and a vehicle lamp control module.

A second aspect of this application provides a vehicle. The vehicle includes a liquid cooling loop system. The liquid cooling loop system includes a reservoir, a water pump, a component requiring heat dissipation, and a heatsink. The heatsink is configured to cool flowing liquid in the liquid cooling loop system. The vehicle further includes the vehicle lamp in the first aspect or any possible implementation of the first aspect. The vehicle lamp is connected to the liquid cooling loop system.

According to the second aspect, the vehicle lamp and the entire vehicle share a liquid cooling cycle. The vehicle lamp does not need an independent heat dissipation system, so that costs of a water pump, a heatsink, a fan, and the like are saved. In this case, a size and a weight of the vehicle lamp may be reduced, a material specification of the vehicle lamp may be degraded, and adaptability of the vehicle lamp after miniaturization is higher, improving production efficiency and user comfort.

In a possible implementation of the second aspect, the vehicle lamp is connected in series to the liquid cooling loop system.

In a possible implementation of the second aspect, the vehicle lamp is connected in parallel to the liquid cooling loop system.

In a possible implementation of the second aspect, the vehicle further includes a flow regulating valve. The flow regulating valve is connected between the vehicle lamp and the liquid cooling loop system.

In this possible implementation, the flow regulating valve may adjust a flow volume of cooling liquid flowing into a liquid cooling plate in the vehicle lamp, and control the flow volume of the cooling liquid to implement precise temperature control, so that a fog problem caused by an excessively low temperature in the vehicle lamp is prevented.

A third aspect of this application provides a connector. The connector includes a support, a liquid inlet pipe joint, a liquid outlet pipe joint, a sealing component, and a fastening component. The liquid inlet pipe joint and the liquid outlet pipe joint are located on the support and are integrated. The fastening component is configured to fasten the support to a lamp housing, so that the liquid inlet pipe joint is attached to one end of a connecting through hole, and the liquid outlet pipe joint is attached to the other end of the connecting through hole. The connecting through hole is disposed on the lamp housing. The sealing component is located on the support, the sealing component is attached to the lamp housing, and sealed space is formed in the vehicle lamp.

In a possible implementation of the third aspect, the sealing component is a sponge or a sealing ring.

In a possible implementation of the third aspect, the sealing component is a soft rubber that is integrated with the support.

In a possible implementation of the third aspect, the fastening component is a screw or a fastener.

In this embodiment of this application, a heating device is attached to a liquid cooling plate. The liquid cooling plate is connected to a liquid cooling loop system in a vehicle through a liquid inlet pipe and a liquid outlet pipe. Heat exchange may be performed by using the liquid cooling loop system in the vehicle and the liquid cooling plate, to reduce a temperature of the heating device in the vehicle lamp. This reduces requirements for a size of the vehicle lamp and a structure of the vehicle lamp on the basis that a heat dissipation requirement of the vehicle lamp is met.

### BRIEF DESCRIPTION OF DRAWINGS

FIG. 1 is a diagram of an architecture of a vehicle according to an embodiment of this application;
FIG. 2 is a diagram of an embodiment of a vehicle lamp according to an embodiment of this application;
FIG. 3 is a diagram of another embodiment of a vehicle lamp according to an embodiment of this application;
FIG. 4A is a diagram of an embodiment of a connector in a vehicle lamp according to an embodiment of this application;
FIG. 4B is a diagram of another embodiment of a connector in a vehicle lamp according to an embodiment of this application;
FIG. 5 is a diagram of another embodiment of a vehicle lamp according to an embodiment of this application;
FIG. 6 is a diagram of another embodiment of a vehicle lamp according to an embodiment of this application;
FIG. 7 is a diagram of another embodiment of a vehicle lamp according to an embodiment of this application;
FIG. 8 is a diagram of an embodiment of a vehicle according to an embodiment of this application;
FIG. 9 is a diagram of another embodiment of a vehicle according to an embodiment of this application;
FIG. 10A is a diagram of another embodiment of a vehicle according to an embodiment of this application;
FIG. 10B is a diagram of another embodiment of a vehicle according to an embodiment of this application;
FIG. 10C is a diagram of another embodiment of a vehicle according to an embodiment of this application;
FIG. 10D is a diagram of another embodiment of a vehicle according to an embodiment of this application;
FIG. 11 is a diagram of another embodiment of a vehicle according to an embodiment of this application; and
FIG. 12 is a diagram of another embodiment of a vehicle according to an embodiment of this application.

### DESCRIPTION OF EMBODIMENTS

The following describes embodiments of this application with reference to accompanying drawings. It is clear that the described embodiments are merely some but not all of embodiments of this application. A person of ordinary skill in the art may learn that, with development of technologies and emergence of new scenarios, the technical solutions provided in embodiments of this application are also applicable to similar technical problems.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

Embodiments of this application provide a vehicle lamp, to meet a heat dissipation requirement of the vehicle lamp and reduce requirements for a size of the vehicle lamp and a structure of the vehicle lamp. Embodiments of this application further provide a corresponding vehicle, a corresponding connector, and the like. Details are separately described in the following.

The following describes an application scenario in embodiments of this application by using an example.

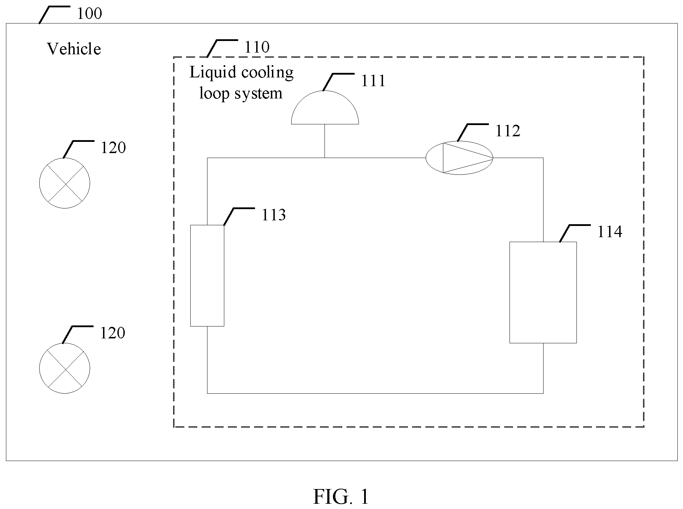

As shown in FIG. 1, in a vehicle 100 (for example, a car, a bus, or a truck powered by gasoline, electricity, or a hybrid of gasoline and electricity), components 114 requiring heat dissipation, such as a motor (motor), a motor control unit (motor control unit, MCU), an on-board charger (on-board charger, OBC), and a voltage converter (DC-DC converter) exist. These components 114 requiring heat dissipation, a reservoir 111, a water pump 112, and a heatsink 113 form a liquid cooling loop system 110 of the vehicle.

Specifically, the reservoir 111 may exhaust air in the liquid cooling loop system 110 and supplement cooling liquid in the liquid cooling loop system 110. The water pump 112 is configured to provide power for the cooling liquid, so that the cooling liquid circulates in the liquid cooling loop system 110. After the cooling liquid passes through the component 114 requiring heat dissipation, the cooling liquid cools the component 114 requiring heat dissipation through heat exchange. The cooling liquid heated by the component 114 requiring heat dissipation flows into the heatsink 113. A fan may be further disposed in the heatsink 113. The heatsink 113 may cool the cooling liquid through natural air convection, forced convection of the fan, or refrigerant in the vehicle 100, so that the cooling liquid can cool the component 114 requiring heat dissipation again. The cooling liquid may be distilled water, deionized water, another liquid-cooled liquid, or the like. It should be understood that a connection manner of the component 114 requiring heat dissipation, the reservoir 111, the water pump 112, the heatsink 113, and the like may not be limited to the connection manner shown in FIG. 1.

The vehicle 100 further includes a vehicle lamp 120. The vehicle lamp 120 includes a headlamp, a tail lamp, another decorative lamp, or the like. When vehicle lamps 120 are high-power vehicle lamps, these vehicle lamps 120 also need to dissipate heat. A junction temperature of a light-emitting diode (light-emitting diode, LED) or a laser diode (laser diode, LD) device in the high-power vehicle lamp 120 needs to be controlled below 140 degrees Celsius to ensure optical performance and reliability requirements. A small size and high heat flux density increase difficulty in heat dissipation. Therefore, the LED/LD needs to overcome the foregoing problem of heat dissipation in lighting. In addition, when a power-type LED/LD is used for the vehicle lamp 120, the vehicle lamp 120 is sealed and is configured in an engine compartment area, and an ambient temperature is up to 100 degrees Celsius or above. Vibration during traveling imposes a high requirement for stability. This increases difficulty in heat dissipation of the vehicle lamp 120.

The following describes the vehicle lamp provided in embodiments of this application by using an example with reference to the foregoing application scenario.

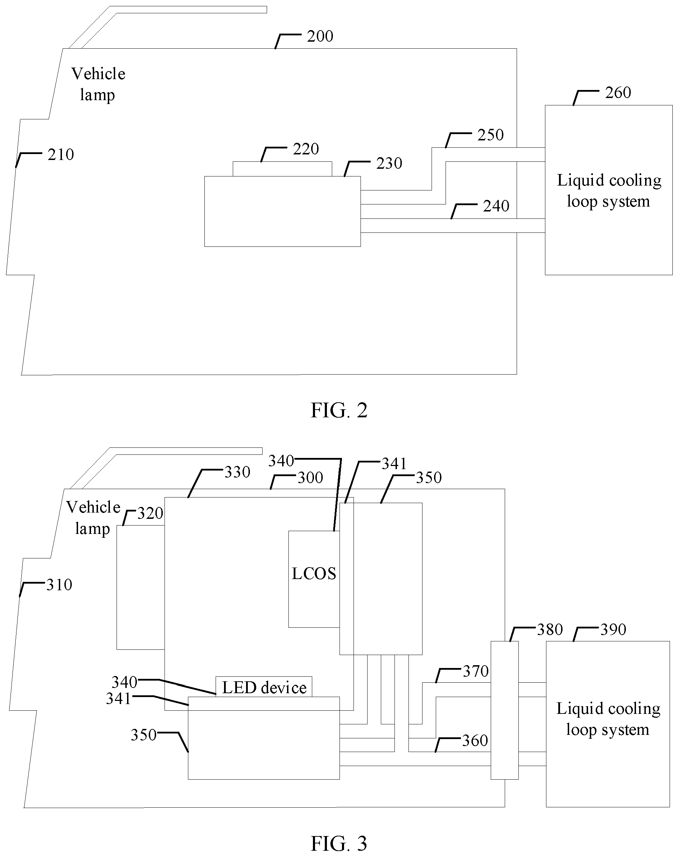

As shown in FIG. 2, a vehicle lamp provided in an embodiment of this application includes a lamp housing 200, a lamp cover 210, a heating device 220, a liquid cooling plate 230, a liquid inlet pipe 240, and a liquid outlet pipe 250.

The heating device 220 is attached to the liquid cooling plate 230. The heating device 220 may be directly attached to the liquid cooling plate 230, or may be indirectly attached to the liquid cooling plate 230 by using another element, provided that the heating device 220 can exchange heat with the liquid cooling plate 230. An exterior frame of the vehicle lamp includes a translucent lamp cover 210 and an opaque lamp housing 200. After the lamp housing 200 and the lamp cover 210 are sealed, sealed space of the vehicle lamp is formed. The liquid cooling plate 230 is connected to a liquid cooling loop system 260 outside the lamp housing 200 through the liquid inlet pipe 240 and the liquid outlet pipe 250. The liquid inlet pipe 240 and the liquid outlet pipe 250 may be pipes inside the lamp housing 200, and pipes in the liquid cooling loop system 260 are connected to the liquid inlet pipe 240 and the liquid outlet pipe 250. Alternatively, the liquid inlet pipe 240 and the liquid outlet pipe 250 may be pipes that are connected from the liquid cooling plate 230 to the liquid cooling loop system 260. Cooling liquid in the liquid cooling loop system 260 may flow into the liquid cooling plate 230 through the liquid inlet pipe 240. After exchanging heat with the heating device 220, the cooling liquid in the liquid cooling plate 230 flows back to the liquid cooling loop system 260 outside the lamp housing 200 through the liquid outlet pipe 250. The liquid cooling loop system 260 may be the liquid cooling loop system shown in FIG. 1 in the vehicle.

It should be understood that when the heating device 220 needs to emit or receive light, a light-emitting end or a light-receiving end of the heating device 220 is exposed in space, and a surface is not covered.

The vehicle lamp has a plurality of implementations. The implementations are separately described in the following.

Implementation 1: A liquid cooling plate is located inside a lamp housing.

When the liquid cooling plate is located in sealed space inside a vehicle lamp, that is, the liquid cooling plate is disposed inside the lamp housing, because the liquid cooling plate is attached to a heating device, the heating device is also located inside the lamp housing. In this case, the heating device is a light source or a pixel. Specifically, the light source is a light-emitting heating device, for example, an LED device and an LD device. The pixel is a non-light emitting heat source, for example, liquid crystal on silicon (liquid crystal on silicon, LCOS) and a digital micromirror device (digital micromirror device, DMD). It should be understood that, one or more heating devices may exist in the vehicle lamp. A quantity of liquid cooling plates may be the same as a quantity of heating devices, that is, one heating device is attached to one liquid cooling plate. However, a plurality of heating devices may also share one liquid cooling plate. To be specific, heat of another heating device is conducted, by using a heat conduction structure, to a substrate of a heating device that is attached to the liquid cooling plate.

The liquid cooling plate is located inside the lamp housing. Therefore, to connect the liquid cooling plate to a liquid cooling loop system outside the lamp housing through a liquid inlet pipe and a liquid outlet pipe, and keep the vehicle lamp as sealed space, the lamp housing further includes a connecting through hole. After being connected to the liquid cooling plate, the liquid inlet pipe and the liquid outlet pipe are connected to the liquid cooling loop system through the connecting through hole, and sealed space is formed in the vehicle lamp. In this case, the lamp housing has two implementations. The two implementations are separately described in the following.

### Implementation 1.1: Connection to the liquid cooling loop system through a connector

As shown in FIG. 3, a vehicle lamp includes a lamp housing 300, a lamp cover 310, a module lens 320, a heating device 340, a liquid cooling plate 350, a liquid inlet pipe 360, a liquid outlet pipe 370, and a connector 380.

Specifically, the heating devices 340 are an LED device and LCOS (it should be understood that the heating device 340 may alternatively be another light source or pixel). The heating device 340 is attached to the liquid cooling plate 350 by using a substrate 341. The heating device 340 may be disposed on the substrate 341. A size of the connector 380 adapts to that of a connecting through hole on the lamp housing 300. The connector 380 is mounted in the connecting through hole. The liquid inlet pipe 360 and the liquid outlet pipe 370 are connected to the liquid cooling loop system 390 outside the lamp housing 300 through the connector 380. In this case, the connector 380 is mounted in the connecting through hole on the lamp housing 300. The connector 380 is connected to the liquid inlet pipe 360 and the liquid outlet pipe 370. The vehicle lamp is sealed space.

Optionally, the vehicle lamp further includes an optical engine body 330. The optical engine body 330 is a mounting mechanical element and is configured to fasten the heating device 340 and the module lens 320 at preset positions, to ensure that a light path formed by the heating device 340 is incident on the module lens 320. The optical engine body 330 may be adjusted based on actual structures of the heating device 340 and the module lens 320. Specifically, the module lens 320 is attached to the optical engine body 330. The optical engine body 330 is jointly mounted with the heating device 340 by using the substrate or another element.

Optionally, a thermally conductive interfacial material, for example, a thermally conductive adhesive, may be further disposed between the substrate 341 and the liquid cooling plate 350.

Optionally, the liquid inlet pipe 360 and the liquid outlet pipe 370 are flexible pipes. Positions and postures of an element and a module in the vehicle lamp may be adjusted.

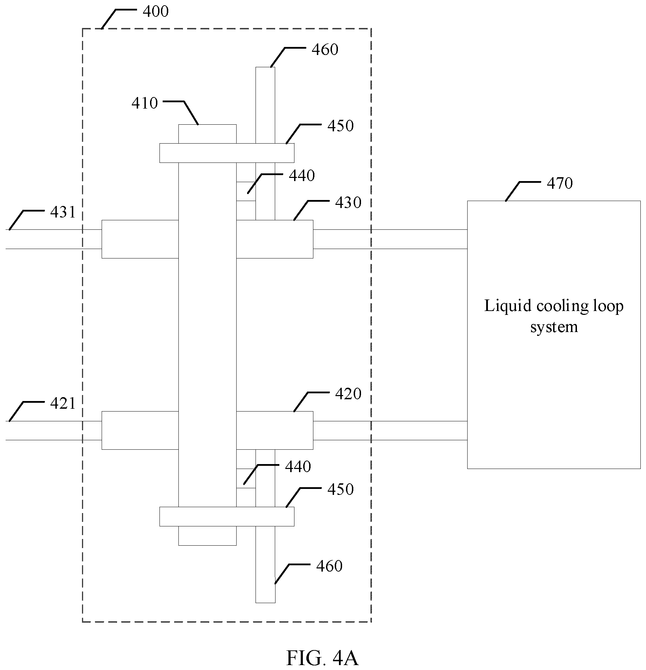

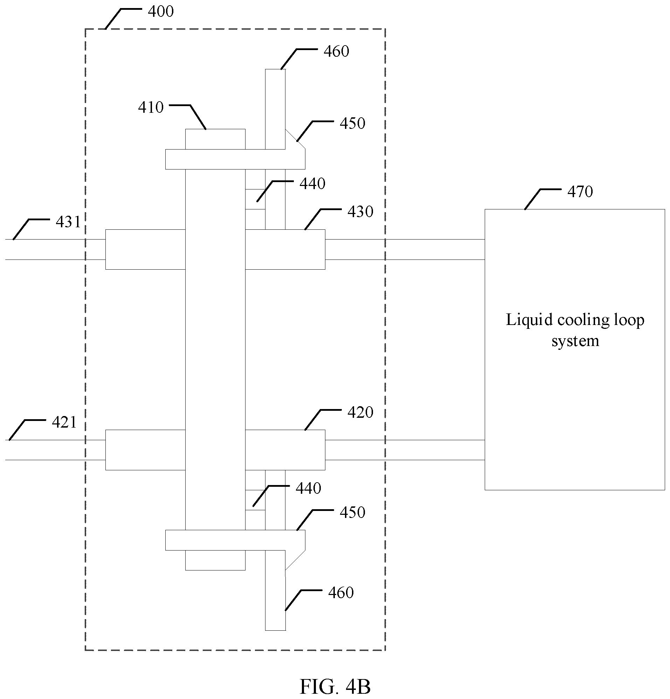

As shown in FIG. 4A and FIG. 4B, a connector 400 includes a support 410, a liquid inlet pipe joint 420, a liquid outlet pipe joint 430, a sealing component 440, and a fastening component 450. The liquid inlet pipe joint 420 and the liquid outlet pipe joint 430 are located on the support 410. The liquid inlet pipe joint 420 is connected to a liquid inlet pipe 421. The liquid outlet pipe joint 430 is connected to a liquid outlet pipe 431. After passing through the connector 400, the liquid inlet pipe 421 and the liquid outlet pipe 431 are connected to a liquid cooling loop system 470 outside a lamp housing 460. The fastening component 450 is configured to fasten the support 410 to the lamp housing 460. The sealing component 440 is located on the support 410. The fastening component 450 fastens the support 410 to the lamp housing 460, so that the sealing component 440 is attached to the lamp housing 460, and the vehicle lamp maintains sealed space.

Optionally, as shown in FIG. 4A, the sealing component 440 is a sponge, a sealing ring, or a soft rubber that is integrated with the support 410. The fastening component 450 is a screw. As shown in FIG. 4B, the sealing component 440 is a sponge, a sealing ring, or a soft rubber that is integrated with the support 410. The fastening component 450 is a fastener. Alternatively, the sealing component 440 and the fastening component 450 may be made of another material or may be another structure. This is not limited in this embodiment of this application.

It should be understood that the liquid inlet pipe joint and the liquid outlet pipe joint are hollow pipes. Optionally, in a possible implementation, cooling liquid does not flow in the liquid inlet pipe joint or the liquid outlet pipe joint. To be specific, the liquid inlet pipe is directly connected to the liquid cooling loop system through the liquid inlet pipe joint, and the liquid outlet pipe is directly connected to the liquid cooling loop system through the liquid outlet pipe joint. In another possible implementation, the cooling liquid flows in the liquid inlet pipe joint. To be specific, the liquid inlet pipe is sleeved on the liquid inlet pipe j oint, and the other end of the liquid inlet pipe joint is sleeved by a pipe of the liquid cooling loop system. The liquid outlet pipe is sleeved on the liquid outlet pipe joint, and the other end of the liquid outlet pipe joint is sleeved by the pipe of the liquid cooling loop system.

### Implementation 1.2: Direct connection to the liquid cooling loop system

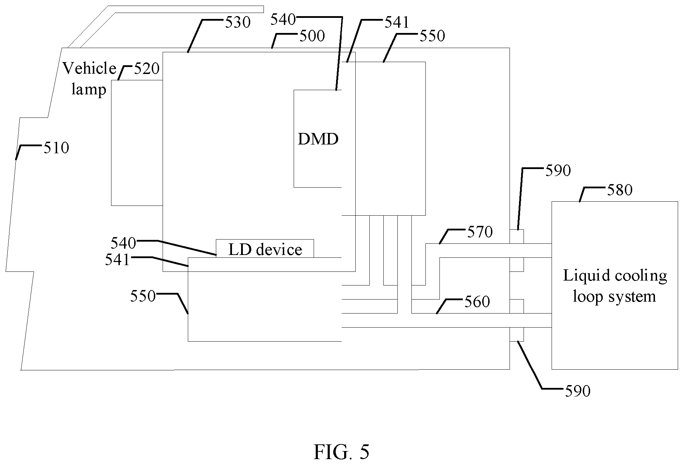

As shown in FIG. 5, the vehicle lamp includes a lamp housing 500, a lamp cover 510, a module lens 520, a heating device 540, a liquid cooling plate 550, a liquid inlet pipe 560, and a liquid outlet pipe 570.

Specifically, the heating device 540 is an LD device and a DMD (it should be understood that the heating device 540 may alternatively be another light source or pixel). The heating device 540 is attached to the liquid cooling plate 550 by using a substrate 541. A connecting through hole includes a first through hole and a second through hole. A size of the first through hole adapts to that of the liquid inlet pipe 560. A size of the second through hole adapts to that of the liquid outlet pipe 570. The liquid inlet pipe 560 is connected to a liquid cooling loop system 580 through the first through hole. The liquid outlet pipe 570 is connected to the liquid cooling loop system 580 through the second through hole. In this case, the connecting through hole on the lamp housing 500 is connected to the liquid inlet pipe 560 and the liquid outlet pipe 570. The vehicle lamp is sealed space.

Optionally, the vehicle lamp further includes an optical engine body 530. The optical engine body 530 is a mounting mechanical element and is configured to fasten the heating device 540 and the module lens 520 at preset positions, to ensure that a light path formed by the heating device 540 is incident on the module lens 520. The optical engine body 530 may be adjusted based on actual structures of the heating device 540 and the module lens 520. Specifically, the module lens 520 is attached to the optical engine body 530. The optical engine body 530 is jointly mounted with the heating device 540 by using the substrate or another element.

In a possible implementation, the LD device and the DMD may share one liquid cooling plate. For example, a substrate of the LD device and a substrate of the DMD are combined into one substrate. One liquid cooling plate is attached to the substrate to complete heat exchange on the two heating devices.

Optionally, a rubber ring 590 is disposed at each of a fitting position between the liquid inlet pipe 560 and the first through hole and a fitting position between the liquid outlet pipe 570 and the second through hole. It should be understood that the rubber ring 590 may be replaced with another element having a sealing function. This is not limited in this embodiment of this application.

Implementation 2: A liquid cooling plate is located on a lamp housing or outside the lamp housing.

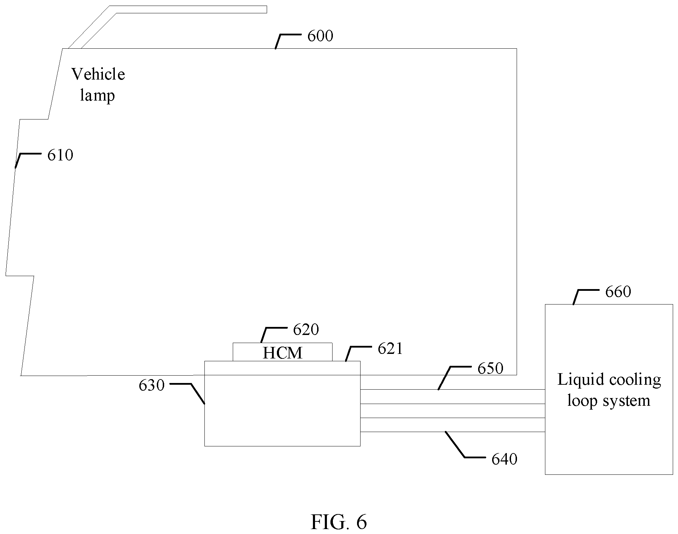

As shown in FIG. 6, a liquid cooling plate 630 in the vehicle lamp is disposed on a lamp housing 600 or outside sealed space formed by the lamp housing 600 and a lamp cover 610. For example, the liquid cooling plate 630 is disposed outside the lamp housing 600. The liquid cooling plate 630 is connected to a liquid cooling loop system 660 outside the lamp housing 600. Because the liquid cooling plate 630 is attached to a heating device 620, the heating device 620 is located on the lamp housing 600, and the vehicle lamp is sealed space. In this case, the heating device 630 is a light source driver module or a vehicle lamp control module (it should be understood that the heating device 630 may alternatively be another light source or pixel). The light source driver module may be specifically an LED driver module (LED driver module, LDM). The vehicle lamp control module may be specifically a headlamp control module (headlamp control module, HCM). For example, the heating device 620 is an HCM. The HCM specifically includes a heating electronic component and a drive board. The drive board in the HCM is attached to the liquid cooling plate 630 by using a substrate 621 (an original heatsink in the HCM is replaced with the liquid cooling plate). The liquid cooling plate 630 exchanges heat with the drive board and the heating electronic component in the HCM by using the substrate 621. The substrate 621 is sealed in parallel with the lamp housing 600, so that the vehicle lamp is sealed space. In this case, the liquid cooling plate 630, the liquid inlet pipe 640, and the liquid outlet pipe 650 are located outside the lamp housing 600. This can avoid leakage of cooling liquid to the inside of the lamp housing 600, avoid condensation in the vehicle lamp, and improve reliability of the vehicle lamp.

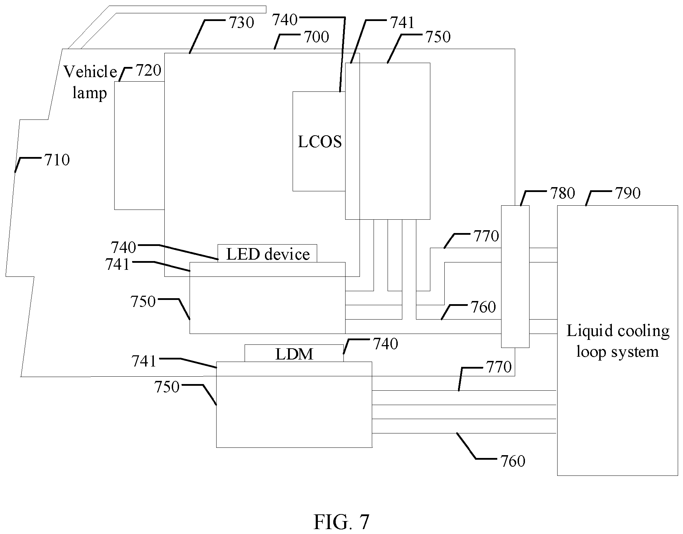

It should be understood that implementation 2 may be combined with implementation 1. As shown in FIG. 7, for example, when implementation 2 is combined with implementation 1.1, the vehicle lamp includes a lamp housing 700, a lamp cover 710, a module lens 720, a heating device 740, a liquid cooling plate 750, a liquid inlet pipe 760, a liquid outlet pipe 770, and a connector 780.

Specifically, heating devices 740 are an LED device and LCOS inside the lamp housing 700, and an LDM on the lamp housing 700 (it should be understood that the heating device 730 may alternatively be another light source or pixel). The heating device 740 inside the lamp housing 700 is attached to the liquid cooling plate 750 by using a substrate 741. The heating device 740 on the lamp housing 700 is also attached to the liquid cooling plate 750 by using the substrate 741. The substrate 741 is parallel to and sealed with the lamp housing 700. A size of the connector 780 adapts to that of a connecting through hole on the lamp housing 700. The connector 780 is mounted in the connecting through hole. The connector 780 is sealed with the connecting through hole. The liquid inlet pipe 760 and the liquid outlet pipe 370 are connected to the liquid cooling loop system 790 outside the lamp housing 700 through the connector 780, so that sealed space is formed in the vehicle lamp.

Optionally, the vehicle lamp further includes an optical engine body 730. The optical engine body 730 is a mounting mechanical element and is configured to fasten the heating device 740 and the module lens 720 at preset positions, to ensure that a light path formed by the heating device 740 is incident on the module lens 720. The optical engine body 730 may be adjusted based on actual structures of the heating device 740 and the module lens 720. Specifically, the module lens 720 is attached to the optical engine body 730. The optical engine body 730 is jointly mounted with the heating device 740 by using the substrate or another element.

It should be understood that implementation 2 may alternatively be combined with implementation 1.2. To be specific, no connector is disposed on the lamp housing, and a plurality of liquid cooling plates are located inside the lamp housing, on the lamp housing, or outside the lamp housing. For a specific implementation, refer to the foregoing corresponding descriptions. Details are not described herein again in this embodiment of this application.

As a size of the vehicle lamp tends to be smaller, power of the vehicle lamp becomes larger. In addition, a user has an increasingly strict requirement for a noise of the vehicle lamp. In the vehicle lamp provided in this embodiment of this application, the heating device is attached to the liquid cooling plate. The liquid cooling plate is connected to the liquid cooling loop system in the vehicle through the liquid inlet pipe and the liquid outlet pipe. Heat exchange may be performed by using the liquid cooling loop system in the vehicle and the liquid cooling plate, to reduce a temperature of the heating device in the vehicle lamp. A heat management system of the entire vehicle is shared, and heat dissipation resources are integrated. In this way, this reduces requirements for a size of the vehicle lamp and a structure of the vehicle lamp on the basis that a heat dissipation requirement of the vehicle lamp is met. In addition, a noise generated by a fan is avoided, so that a noise level of the vehicle lamp can be reduced from 40 decibels to 0 decibels. A size of the vehicle lamp module can be reduced by more than 50%, implementing lightweight and reducing carbon emission.

The foregoing describes the vehicle lamp provided in embodiments of this application. The following describes a vehicle provided in embodiments of this application.

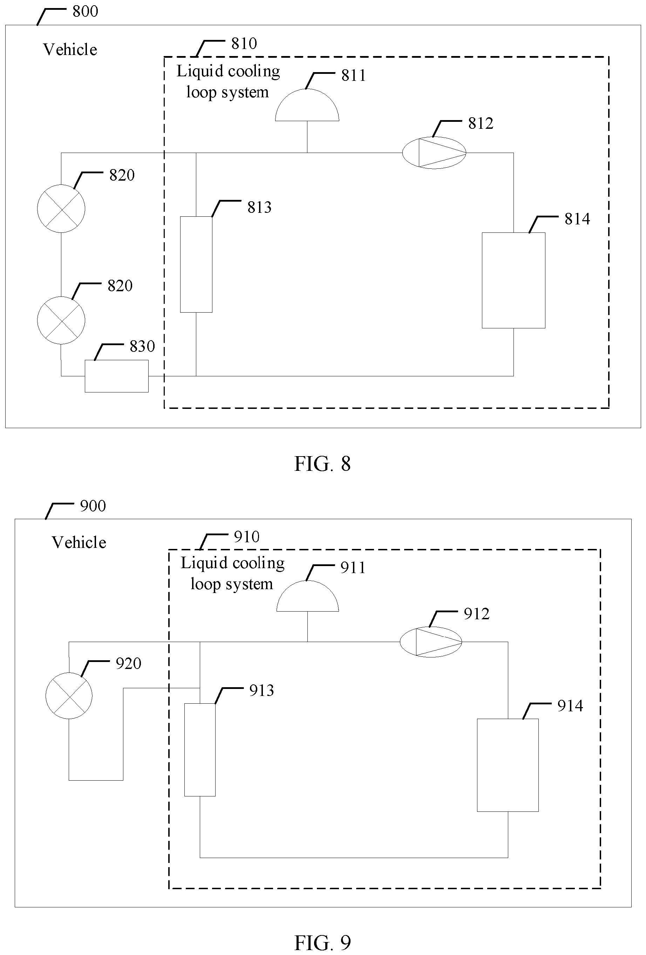

As shown in FIG. 8, a vehicle 800 provided in this embodiment of this application includes a liquid cooling loop system 810 and any vehicle lamp 820 described in FIG. 2 to FIG. 7. The liquid cooling loop system 810 may be the liquid cooling loop system shown in FIG. 1 in the vehicle. The liquid cooling loop system 810 provided in this embodiment of this application includes a reservoir 811, a water pump 812, a component 814 requiring heat dissipation, and a heatsink 813. The reservoir 811 may exhaust air in the liquid cooling loop system 810 and supplement cooling liquid in the liquid cooling loop system 810. The water pump 812 is configured to provide power for the cooling liquid, so that the cooling liquid circulates in the liquid cooling loop system 810. After the cooling liquid passes through the component 814 requiring heat dissipation and the vehicle lamp 820, the cooling liquid cools the component 814 requiring heat dissipation and the vehicle lamp 820 through heat exchange. The cooling liquid may further flow into the heatsink 813. The heatsink 813 may cool the cooling liquid by using air or refrigerant in the vehicle 800. A fan may be further disposed in the heatsink 813, so that the cooling liquid can cool the component 813 requiring heat dissipation and the vehicle lamp 820 again.

The cooling liquid may be distilled water, deionized water, another liquid working substance, or the like. A connection manner of the component 814 requiring heat dissipation, the reservoir 811, the water pump 812, the heatsink 813, and the like may not be limited to the connection manner shown in FIG. 8.

Optionally, the vehicle 800 further includes a flow regulating valve 830. The flow regulating valve 830 is connected between the vehicle lamp 820 and the liquid cooling loop system 810. The flow regulating valve 830 may adjust a flow volume of the cooling liquid flowing into a liquid cooling plate in the vehicle lamp 820, and control the flow volume of the cooling liquid to implement precise temperature control, so that a fog problem caused by an excessively low temperature in the vehicle lamp 820 is prevented.

In the vehicle provided in this embodiment of this application, the vehicle lamp is connected to the liquid cooling loop system. As a quantity of vehicle lamps changes, there are a plurality of connection manners of the vehicle lamp and the liquid cooling loop system. Details are separately described in the following.

### 1. There is one vehicle lamp.

As shown in FIG. 9, a vehicle 900 has only one vehicle lamp 920 that is a high-power vehicle lamp and that requires heat dissipation. The vehicle lamp 920 is connected between a heatsink 913 and a reservoir 911 in a liquid cooling loop system 910. After a water pump 912 in the liquid cooling loop system 910 transports cooling liquid to a component 914 requiring heat dissipation, the component 914 requiring heat dissipation is cooled through heat exchange. The heated cooling liquid continues to flow into the heatsink 913. The heatsink 913 cools the cooling liquid by using air or refrigerant in the vehicle 900. The cooled cooling liquid continues to flow into the vehicle lamp 920, and cools the vehicle lamp 920 through heat exchange.

### 2. There are two vehicle lamps.

Refer to FIG. 8. When the vehicle has two vehicle lamps (for example, two headlamps) that require heat dissipation, the two vehicle lamps 820 may be considered to be connected in series to the liquid cooling loop system 810 as a whole. Specifically, the two vehicle lamps 820 are connected in series and then connected in parallel to the heatsink 813. In this way, a length of a water pipe in the liquid cooling loop system 810 can be shortened to a maximum extent, branch flow resistance can be reduced, and loadability is good.

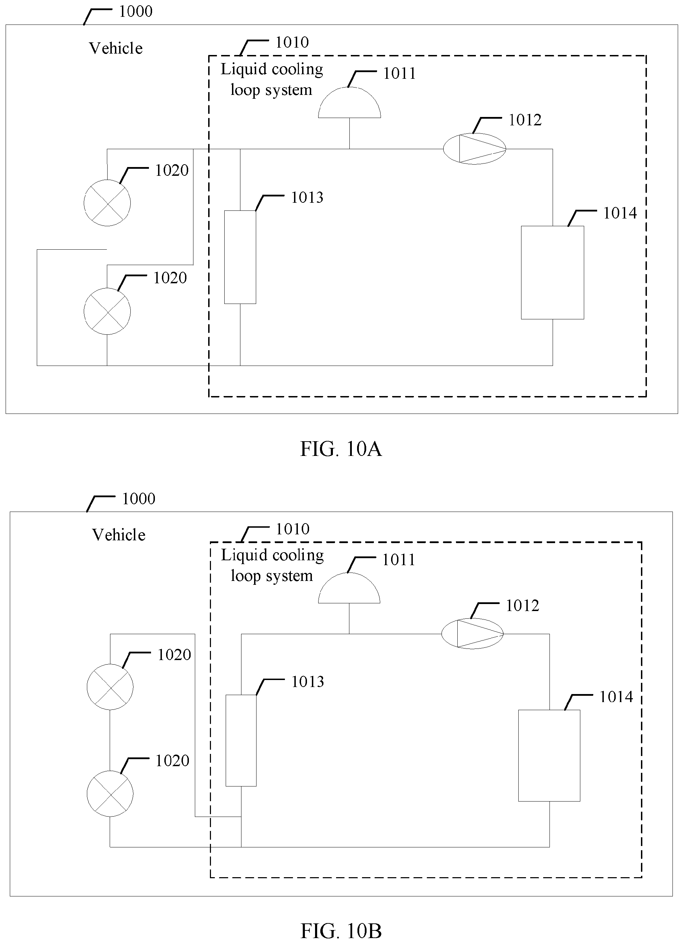

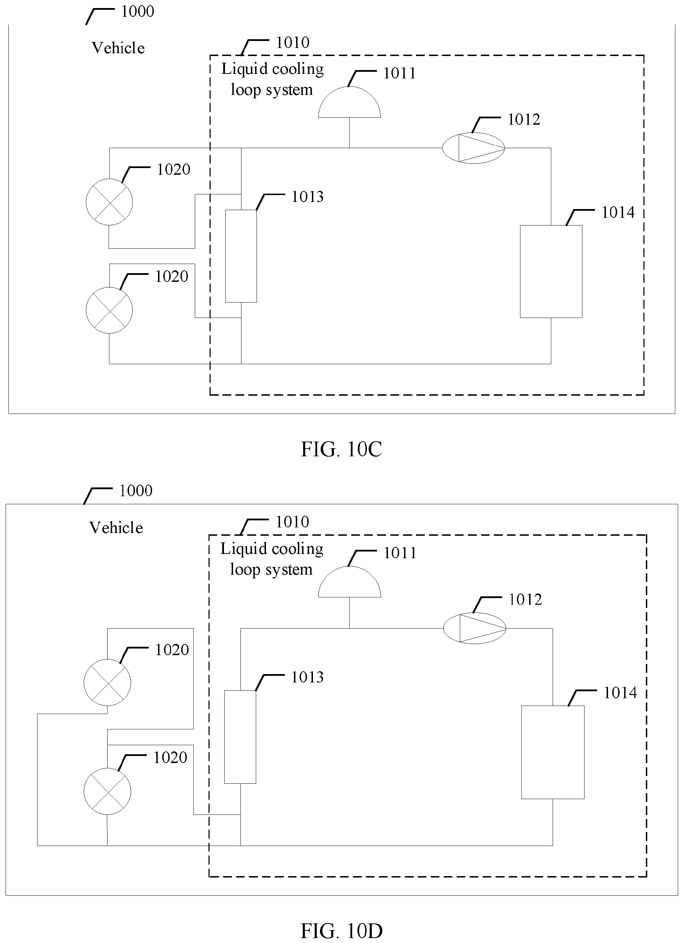

The two vehicle lamps further have a plurality of implementations. As shown in FIG. 10A to FIG. 10D, after cooling liquid is added to a reservoir 1011 in a liquid cooling loop system 1010, a water pump 1012 transports the cooling liquid to a component 1014 requiring heat dissipation, a heatsink 1013, and two vehicle lamps 1020. More specifically, in FIG. 10A, the two vehicle lamps 1020 may be considered to be connected in parallel to the liquid cooling loop system 1010 as a whole. Specifically, the two vehicle lamps 1020 are separately connected in parallel to the heatsink 1013. In this way, in comparison with the connection manner shown in FIG. 8, impact of heat dissipation between the two vehicle lamps 1020 is small. The cooling liquid is divided into two branches and flows into the two vehicle lamps 1020 respectively. In FIG. 10B, the two vehicle lamps 1020 may be considered to be connected in series to the liquid cooling loop system 1010 as a whole. Specifically, the two vehicle lamps 1020 are connected in series, and then connected in parallel to one side of the heatsink 1013. In this way, in comparison with the connection manner shown in FIG. 8, the cooling liquid that is heated up after heat dissipation for the two vehicle lamps 1020 flows through the heatsink 1013, and does not greatly affect a temperature of the cooling liquid in a trunk of the liquid cooling loop system 1010. In FIG. 10C, the two vehicle lamps 1020 are not connected to each other, but are directly connected in series to the liquid cooling loop system 1010 as a whole. Specifically, the two vehicle lamps 1020 are respectively connected in parallel to two sides of the heatsink 1013. In this way, impact of heat dissipation between the two vehicle lamps 1020 may also be small. In FIG. 10D, the two vehicle lamps 1020 may be considered to be connected in series, and then connected in parallel to the liquid cooling loop system 1010 as a whole. Specifically, the two vehicle lamps 1020 are connected in series, and then connected in parallel to one side of the heatsink 1013. In this way, impact of heat dissipation between the two vehicle lamps 1020 may be further reduced.

### 3. There are four vehicle lamps.

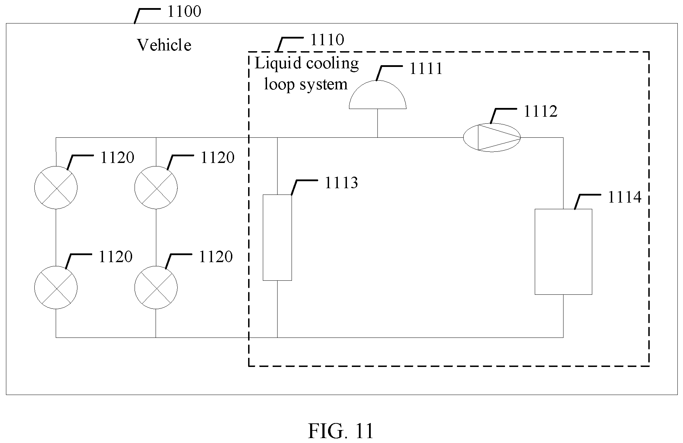

As shown in FIG. 11, when a vehicle 1100 has four vehicle lamps 1120 (for example, two headlamps and two tail lamps) that require heat dissipation, the four vehicle lamps 1120 are connected in series in pairs, and then connected in parallel to two sides of a heatsink 1113 in a liquid cooling loop system 1110. After cooling liquid is added to a reservoir 1111 in the liquid cooling loop system 1110, a water pump 1112 transports the cooling liquid to a component 1114 requiring heat dissipation, and the component 1114 requiring heat dissipation is cooled through heat exchange. The heated cooling liquid continues to flow into the heatsink 1113 and four vehicle lamps 1120. The heatsink 1113 cools the cooling liquid by using air or refrigerant in the vehicle 1100. The cooled cooling liquid continues to flow into the vehicle lamp 1120, and cools the vehicle lamp 1120 through heat exchange.

It should be understood that there may be three or five vehicles that need to be connected to the liquid cooling loop system, and one or more vehicle lamps may be connected to the liquid cooling loop system in another manner. This is not limited in this embodiment of this application.

Optionally, in the vehicle provided in this embodiment of this application, the vehicle lamp may be replaced with another module requiring heat dissipation, for example, a head up display (head up display, HUD) module, a vehicle-mounted display, or a seat temperature adjustment module, or is connected to a liquid cooling loop system together with the vehicle lamp.

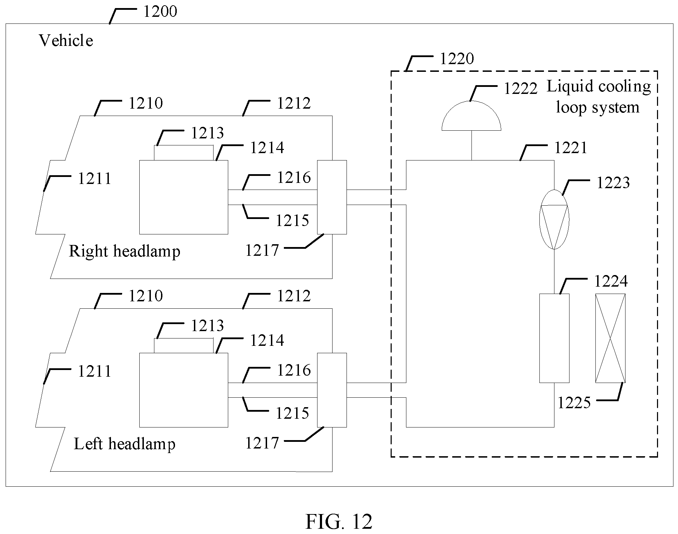

To describe a connection relationship between a liquid cooling loop system and a vehicle lamp in a vehicle in more detail, as shown in FIG. 12, a vehicle 1200 provided in this embodiment of this application includes two vehicle lamps 1210 and a liquid cooling loop system 1220. The liquid cooling loop system 1220 is a cooling system provided by the vehicle 1200. The two vehicle lamps 1210 are a left headlamp and a right headlamp of the vehicle 1200. The vehicle lamp 1210 includes a lamp cover 1211, a lamp housing 1212, a heating device 1213, a liquid cooling plate 1214, a liquid inlet pipe 1215, a liquid outlet pipe 1216, and a connector 1217. The liquid cooling loop system 1220 includes a liquid cooling loop pipe 1221, a reservoir 1222, a water pump 1223, a heatsink 1224, and a cooling fan 1225.

Specifically, the lamp cover 1211, the lamp housing 1212, the connector 1213, the liquid inlet pipe 12115, and the liquid outlet pipe 1216 are jointly enabled to form sealed space in the vehicle lamp 1210. After cooling liquid is added to the reservoir 1222 in the liquid cooling loop system 1220, the cooling liquid starts to flow in the liquid cooling loop pipe 1221 through the water pump 1223. When the cooling liquid passes through the heatsink 1224, the heatsink 1224 cools the cooling liquid through natural air convection and forced convection of the cooling fan 1225. Then, the cooling liquid flows into the liquid cooling plate 1214 in the vehicle lamp 1210 through the liquid inlet pipe 1215 and the connector 1217, to exchange heat with the heating device 1213. The cooling liquid flows back to the liquid cooling loop pipe 1221 in the liquid cooling loop system 1220 through the liquid outlet pipe 1216 and the connector 1217, continues to flow into a next vehicle lamp 1210, and finally flows back to the heatsink 1224 again to complete cooling, so that the heating device 1213 in the vehicle lamp 1220 is cyclically cooled.

It should be understood that, when the vehicle 1200 does not have a low-temperature liquid cooling loop system, the liquid cooling loop system 1220 may alternatively be separately disposed for two vehicle lamps 1210 additionally. The liquid cooling loop system 1220 is not connected to a component requiring heat dissipation in the vehicle 1200, to ensure that the cooling liquid in the liquid cooling loop system 1220 is used for heat dissipation only for one or more vehicle lamps 1210 (refer to the foregoing different quantities of vehicle lamps in FIG. 9 to FIG. 11), improving heat dissipation effect. In addition, when the liquid cooling loop system 1220 is separately disposed for the vehicle lamp 1210, to ensure miniaturization and adaptability of the liquid cooling loop system 1220, optionally, the reservoir 1222 may not be disposed in the liquid cooling loop system 1220, and the cooling liquid is used cyclically in the liquid cooling loop system 1220.

According to the vehicle provided in this embodiment of this application, the vehicle lamp and the entire vehicle share a liquid cooling cycle. The vehicle lamp does not need an independent heat dissipation system, so that costs of a water pump, a heatsink, a fan, and the like are saved. In this case, a size and a weight of the vehicle lamp may be reduced, a material specification of the vehicle lamp may be degraded, and adaptability of the vehicle lamp after miniaturization is higher, improving production efficiency. In addition, a heat dissipation fan is avoided in the vehicle lamp, a noise generated by the heat dissipation fan is reduced, and user comfort is improved.

The foregoing describes the vehicle lamp and the vehicle provided in embodiments of this application. The following describes a connector provided in embodiments of this application.

An embodiment of this application further provides a connector. For the connector, refer to the connector 400 in FIG. 4A and FIG. 4B. The connector includes a support 410, a liquid inlet pipe joint 420, a liquid outlet pipe joint 430, a sealing component 440, and a fastening component 450. The liquid inlet pipe joint 420 and the liquid outlet pipe joint 430 are located on the support 410 and are integrated. The fastening component 450 is configured to fasten the support 410 to a lamp housing 460, so that the liquid inlet pipe joint 420 is attached to one end of a connecting through hole, and the liquid outlet pipe joint 430 is attached to the other end of the connecting through hole. The connecting through hole is disposed on the lamp housing 460. The sealing component 440 is located on the support 410, the fastening component 450 fastens the support 410 to the lamp housing 460, and the sealing component 440 is attached to the lamp housing 460 to form sealed space in the vehicle lamp corresponding to the lamp housing 460.

Optionally, the sealing component 440 may be a sponge or a sealing ring. Alternatively, the sealing component 440 may be a soft rubber that is integrated with the support. The fastening component 450 is a screw or a fastener. For a specific implementation of the connector, refer to FIG. 4A and FIG. 4B, and the descriptions of the connector in implementation 1.1. Details are not described in this embodiment of this application.

In the several embodiments provided in this application, it should be understood that the disclosed structures may be implemented in other manners. For example, the described vehicle lamp and vehicle embodiments are merely examples. For example, division into the elements is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

## Claims

1. A vehicle lamp, comprising a lamp housing, a heating device, a liquid cooling plate, a liquid inlet pipe, and a liquid outlet pipe, wherein
the heating device is attached to the liquid cooling plate; and
the liquid cooling plate is connected to a liquid cooling loop system outside the lamp housing through the liquid inlet pipe and the liquid outlet pipe.

2. The vehicle lamp according to claim 1, wherein the liquid cooling plate is located in sealed space inside the vehicle lamp, the lamp housing comprises a connecting through hole, and the liquid inlet pipe and the liquid outlet pipe are connected to the liquid cooling loop system through the connecting through hole.

3. The vehicle lamp according to claim 2, wherein the vehicle lamp further comprises a connector, the connector is mounted in the connecting through hole, and the liquid inlet pipe and the liquid outlet pipe are connected to the liquid cooling loop system through the connector.

4. The vehicle lamp according to claim 3, wherein the connector comprises a support, a liquid inlet pipe joint, a liquid outlet pipe joint, a sealing component, and a fastening component;
the liquid inlet pipe joint and the liquid outlet pipe joint are located on the support, the liquid inlet pipe joint is connected to the liquid inlet pipe, and the liquid outlet pipe joint is connected to the liquid outlet pipe;
the fastening component is configured to fasten the support to the lamp housing; and
the sealing component is located on the support, and the sealing component is attached to the lamp housing.

5. The vehicle lamp according to claim 4, wherein the sealing component is a sponge or a sealing ring.

6. The vehicle lamp according to claim 4, wherein the sealing component is a soft rubber that is integrated with the support.

7. The vehicle lamp according to any one of claims 4 to 6, wherein the fastening component is a screw or a fastener.

8. The vehicle lamp according to claim 2, wherein the connecting through hole comprises a first through hole and a second through hole, the liquid inlet pipe is connected to the liquid cooling loop system through the first through hole, and the liquid outlet pipe is connected to the liquid cooling loop system through the second through hole.

9. The vehicle lamp according to claim 8, wherein a rubber ring is disposed at each of a fitting position between the liquid inlet pipe and the first through hole and a fitting position between the liquid outlet pipe and the second through hole.

10. The vehicle lamp according to claim 1, wherein the liquid cooling plate is located on the lamp housing or outside the lamp housing, and the inside of the vehicle lamp is sealed space.

11. The vehicle lamp according to claim 10, wherein the heating device is located on the lamp housing.

12. The vehicle lamp according to any one of claims 1 to 11, wherein the heating device comprises at least one of a light source, a pixel, a light source driver module, and a vehicle lamp control module.

13. A vehicle, comprising a liquid cooling loop system, wherein the liquid cooling loop system comprises a reservoir, a water pump, a component requiring heat dissipation, and a heatsink, the heatsink is configured to cool flowing liquid in the liquid cooling loop system, the vehicle further comprises the vehicle lamp according to any one of claims 1 to 12, and the vehicle lamp is connected to the liquid cooling loop system.

14. The vehicle according to claim 13, wherein the vehicle lamp is connected in series to the liquid cooling loop system.

15. The vehicle according to claim 13, wherein the vehicle lamp is connected in parallel to the liquid cooling loop system.

16. The vehicle according to any one of claims 13 to 15, wherein the vehicle further comprises a flow regulating valve, and the flow regulating valve is connected between the vehicle lamp and the liquid cooling loop system.
